# EUROPÄISCHE PATENTSCHRIFT

(11) **EP 3 064 601 B1**
(45) Veröffentlichungstag und Bekanntmachung des Hinweises auf die Patenterteilung: **02.03.2022**
(21) Anmeldenummer: 16000841.3
(22) Anmeldetag: 18.02.2011
(51) Int. Cl.: C22B 7/02, C22B 30/04

(54) **VERFAHREN UND VORRICHTUNG ZUR BEHANDLUNG VON FLUGSTAUB**
METHOD AND DEVICE FOR PROCESSING FLUE DUST
PROCÉDÉ ET DISPOSITIF DE TRAITEMENT DE CENDRES VOLANTES

(30) Priorität: 10.03.2010 DE 102010011242
(43) Veröffentlichungstag der Anmeldung: 07.09.2016
(62) Teilanmeldung aus: 11718252.7
(73) Patentinhaber: Aurubis AG, 20539 Hamburg (DE)
(72) Erfinder: Kadereit, Harald, 21614 Buxtehude (DE); Schmidl, Jürgen, 21073 Hamburg (DE); Hoppe, Michael, 52078 Aachen (DE); Specht, Andreas, 21224 Rosengarten (DE)
(74) Vertreter: Klickow & Wetzel PartGmbB

(56) Entgegenhaltungen:
- WO-A1-2006/119861
- WO-A1-2008/149683
- SU-A1- 773 111
- US-A1- 2006 130 611
- ROBERTO PARRA AND ROBERTO PARADA: "MINOR ELEMENT CONTROL BY FLUE DUST TREATMENT IN COPPER SMELTING", PROCEEDINGS OF THE 2008 GLOBAL SYMPOSIUM ON RECYCLING, WASTE TREATMENT AND CLEAN TECHNOLOGY, REWAS 2008, OCTOBER 12 - 15, 2008, CANCUN, MEXICO,, 12. Oktober 2008 (2008-10-12), Seiten 1-12, XP003033582, ISBN: 978-0-87339-726-1
- SHEN, R. ET AL: "A feasibilty study of recycling of manganese furnace dust", INFACON XI PROCEEDINGS, 18. Februar 2007 (2007-02-18), - 21. Februar 2007 (2007-02-21), Seiten 507-519, XP002640256,

## Beschreibung

Die Erfindung betrifft ein Verfahren zur Aufbereitung von bei der Produktion von Kupfer entstehenden Flugstäuben, bei dem die Flugstäube nach einer Zugabe von Schwefel und/oder einer Schwefelverbindung in einer Wirbelschicht erhitzt und flüchtige Bestandteile abgeschieden werden, wobei das Erhitzen der Flugstäube in einer inerten Atmosphäre durchgeführt wird und die Behandlung der Flugstäube als kontinuierlicher Prozess durchgeführt wird und eine pyrometallurgische Behandlung der Flugstäube erfolgt und eine einstufige Abgasbehandlung zur Abscheidung von flüchtigen Bestandteilen, wie Arsen, Wismut, Cadmium und/oder Blei, erfolgt.

Bei der Verhüttung von Kupfererzen werden typischerweise Konzentrate in Form von sulfidischen Flotationsprodukten als Ausgangsstoff verwendet. Diese Flotationsprodukte enthalten etwa zu einem Drittel Kupfer, zu einem weiteren Drittel Eisen und zu einem letzten Drittel Schwefel. In geringen Konzentrationen sind darüber hinaus eine Vielzahl weiterer chemischer Elemente enthalten, beispielsweise Arsen, Wismut, Cadmium und Blei. Diese Nebenelemente verteilen sich nach deren chemischen Gleichgewichten bei den vorhandenen Prozessbedingungen auf die Stein-, Schlacken- und Abgasphase. Die Abgasphase enthält Gas und Flugstaub.

In einem ersten Verarbeitungsschritt wird aus dem Kupferkonzentrat ein Teil des Eisens durch selektive Oxidation abgetrennt. Bei einer Temperatur von etwa 1200°C wird das oxidierte Eisen durch Zugabe von Sand in einer flüssigen Schlackenphase gebunden. Aufgrund dieser hohen Temperaturen wird ein Teil der flüchtigen chemischen Verbindungen mit dem Abgas ausgetragen. Aus Gründen des Umweltschutzes und zur Energierückgewinnung erfolgt die Abgasbehandlung in einem Abhitzekessel und einer elektrischen Gasreinigung. Die durch Rekondensation gebildeten Partikel sowie mitgerissene Partikel bilden den sogenannten Flugstaub. Darin liegen die flüchtigen Elemente in einer höheren Konzentration als im Ausgangsprodukt der Konzentratmischung vor.

Da in Flugstäuben erhebliche Mengen an Kupfer enthalten sind, wird angestrebt, die Flugstäube erneut dem Verhüttungsprozess zuzuführen. Da hierbei auch eine Rückführung der flüchtigen Elemente erfolgt, kommt es ohne geeignete Gegenmaßnahmen zu einer Anreicherung der Nebenelemente im Prozess.

Aus der Veröffentlichung "Parra & Parada, Minor element control by flue dust treatment in copper smelting" ist ein Verfahren zur Behandlung von Flugstäuben aus der Kupferproduktion zur Rückgewinnung von Kupfer und der Stabilisierung von kritischen Bestandteilen des Flugstaubes unter der Verwendung eines Ofens, in dem der Flugstaub unter Zusatz eines sulfidisierenden Wirkstoffes in einer neutralen Atmosphäre erhitzt wird, bekannt.

In der SU 773 111 A1 ist ein zweistufiges Verfahren zur Reinigung von bei Pb-Zn-Konvertern anfallenden Stäuben offenbart, wobei das im Staub enthaltene Arsen in Form eines ungiftigen Sulfids abgeschieden wird. Dazu wird dem Flugstaub elementarer Schwefel zugesetzt und anschließend in einer inerten Atmosphäre in zwei Stufen erhitzt.

Aus der Veröffentlichung "Shen et al., A feasibility study of recycling of mananese furnace dust" ist ein Verfahren zur Behandlung von Flugstäuben aus der Manganherstellung bekannt, wobei die Stäube mit Erz und Koks vermischt und in einer inerten Atmosphäre erhitzt werden, um Zink zu verdampfen und aus dem Staub zu entfernen.

Aus der JP 2008169477 A ist eine Staubreinigung in einem zweistufigen Verfahren mit Röstung und Laugung bekannt.

Da in Flugstäuben erhebliche Mengen an Kupfer enthalten sind, wird angestrebt, die Flugstäube erneut dem Verhüttungsprozess zuzuführen. Da hierbei auch eine Rückführung der flüchtigen Elemente erfolgt, kommt es ohne geeignete Gegenmaßnahmen zu einer Anreicherung der Nebenelemente im Prozess.

Eine Aufbereitung von Flugstäuben wird bereits in der US 5 234 669 beschrieben. Eine Anreicherung unerwünschter chemischer Elemente im Prozess kann gemäß dem in dieser Veröffentlichung beschriebenen Verfahren aber nicht verhindert werden.

Aufgabe der vorliegenden Erfindung ist es daher, ein Verfahren der einleitend genannten Art derart zu verbessern, dass der Anteil unerwünschter flüchtiger Verbindungen in Flugstäuben effektiver vermindert wird.

Diese Aufgabe wird erfindungsgemäß durch die Merkmalskombination von Patentanspruch Nr. 1 gelöst.

Unter Verwendung des erfindungsgemäßen Verfahrens sowie der entsprechenden Vorrichtung ist es möglich, unerwünschte chemische Elemente aus den Flugstäuben zu entfernen bzw. deren Anteil zumindest erheblich zu reduzieren. Erfindungsgemäß wird das Entstehen von SO2-haltigen Abgasen vermieden bzw. zumindest wesentlich reduziert. Die Abgase müssen deshalb nicht gesondert wie die hoch-SO2-haltigen Hüttenabgase behandelt werden, um beispielsweise eine Verflüssigung des SO2 oder eine Umwandlung in Schwefelsäure vorzunehmen.

Erfindungsgemäß entstehen geringere Abgasmengen als bei herkömmlichen Verfahren. Durch die Verwendung der inerten Atmosphäre fällt der Schwefel nicht in Form von SO2 sondern elementar oder in sulfidischen Verbindungen an. Durch die Vermeidung einer zusätzlichen Abgasbehandlung, beispielsweise in Form einer Doppel-/Kontaktanlage zur Schwefelsäuregewinnung, können die erforderlichen Investitionskosten deutlich vermindert werden. Weitere Vorteile liegen in einer Durchsatzsteigerung im Prozess der Kupferherstellung und in der Unterstützung einer Verwendung von komlexeren Erzkonzentraten, da durch die erfindungsgemäße Behandlung der Flugstäube eine Anreicherung im Prozess verhindert bzw. deutlich reduziert wird.

Die vorliegende Erfindung bietet die Möglichkeit, verschiedene Elemente, die die Qualität der Produkte bei der Kupferherstellung negativ beeinflussen, zu separieren und in einem Feststoff anzureichern.

Ein typischer Prozessablauf erfolgt derart, dass Arsen oder eine Arsen-Schwefelverbindung als flüchtiger Bestandteil mit dem Abgas ausgetragen und in der nachgeschalteten Abgasbehandlung als Feststoff oder im Waschwasser abgeschieden wird.

Eine einfache Prozessdurchführung wird dadurch unterstützt, dass die Behandlung der Flugstäube als kontinuierlicher Prozess durchgeführt werden kann.

Eine einfache Prozessdurchführung wird ebenfalls dadurch erreicht, dass die Behandlung der Flugstäube bei Umgebungsdruck durchgeführt wird.

Die Entfernung der flüchtigen Bestandteile wird dadurch unterstützt, dass die Behandlung der Flugstäube bei Unterdruck durchgeführt wird, beispielsweise bei 200 mbar bis 400 mbar.

Eine Beschleunigung der thermischen Prozesse bei der Behandlung der Flugstäube während der thermischen Behandlung kann dadurch erfolgen, dass die Behandlung der Flugstäube bei Überdruck durchgeführt wird.

Ein typischer Prozessbereich wird dadurch definiert, dass die Temperatur während der Erhitzung der Flugstäube mindestens zeitweilig im Bereich von 500°C bis 1.000°C liegt. Bevorzugt ist ein Bereich von 650°C bis 950°C.

Gemäß einer bevorzugten Ausführungsform ist angestrebt, dass ein Anteil von Schwefeldioxid im Abgas im Mittel höchstens 5 Volumenprozent beträgt. Bevorzugt im Mittel höchstens 2%.

In den Zeichnungen sind Ausführungsbeispiele der Erfindung schematisch dargestellt. Es zeigen:
- Fig. 1: ein Anlagenkonzept zur pyrometallurgischen Behandlung von Flugstäuben im nicht erfindungsgemäßen Drehrohrofen mit zweistufiger Abgasbehandlung,
- Fig. 2: ein Verfahrenskonzept zur pyrometallurgischen Behandlung von Flugstäuben im Wirbelschichtverfahren mit einstufiger Abgasbehandlung,
- Fig. 3: ein Schema zur Flugstaubabführung und
- Fig. 4: eine Schwefelbilanz zur Gegenüberstellung des Standes der Technik sowie des erfindungsgemäßen Verfahrens.

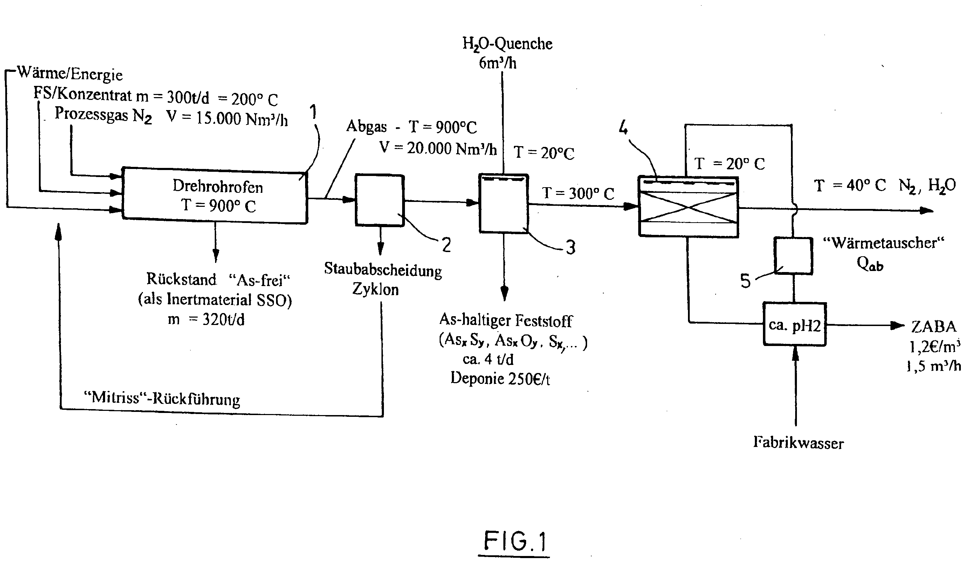

Figur 1 zeigt die Verwendung eines nicht erfindungsgemäßen Drehrohrofens (1), der eine Behandlung des zugeführten Materials bei einer Temperatur von etwa 900°C durchführt. Die zugeführten Stoffe sind hierbei zum einen Kupferkonzentrat und zum anderen abgeschiedene Flugstäube. Die Staubabscheidung erfolgt im Bereich eines Zyklons (2).

Die Behandlung im nicht erfindungsgemäßen Drehrohrofen (1) erfolgt in einer inerten Atmosphäre. Typischerweise wird hierzu Stickstoff verwendet. Bei einer Zufuhr der Konzentrat-Flugstaub-Mischung mit einem Massenstrom von 300 t pro Tag beträgt eine typische Menge der Zufuhr an Stickstoff 15.000 Nm³ pro Stunde. Die dem Zyklon (2) zugeführte Abgasmenge beträgt bei einem derartigen Durchsatz typischerweise 20.000 Nm³ pro Stunde bei einer Abgastemperatur von etwa 900°C. (Nm³ = NormKubikmeter)

Alternativ zur Verwendung von Stickstoff als Inertgas können auch andere Gase verwendet werden. Beispielsweise ist an die Verwendung von Argon gedacht. Die Rösttemperatur von 900°C stellt lediglich eine bevorzugte Temperatur dar. Typischerweise ist eine Temperatur im Intervall von 650°C bis 950°C realisierbar. Dem nicht erfindungsgemäße Drehrohrofen (1) werden die Flugstäube und das frische Konzentrat in einem Mischungsverhältnis von Konzentrat/Flugstäuben typischerweise im Intervall von 1:3 bis 1:1 zugeführt. Die Verweilzeit der Mischung im Drehrohrofen (1) beträgt typischerweise 1 bis 4 Stunden.

Im Anschluss an den Zyklon (2) ist ein Abscheider (3) angeordnet, in dem ein arsenhaltiger Feststoff anfällt. Abgase des Abscheiders (3) werden einem Sekundärabscheider (4) zugeführt. Der Sekundärabscheider (4) ist zur Energierückgewinnung mit einem Wärmetauscher (5) versehen, um die Temperatur des finalen Abgases auf etwa 40°C zu reduzieren, um die betreffende Energie zu nutzen.

Sämtliche in Figur 1 eingetragenen Werte der Prozessparameter sind lediglich beispielhaft und können in erheblichen Breiten variiert werden. Es erfolgt hierbei eine Anpassung an die konkreten Anwendungsanforderungen, die Durchsatzmengen sowie die Beschaffenheit der Ausgangsprodukte.

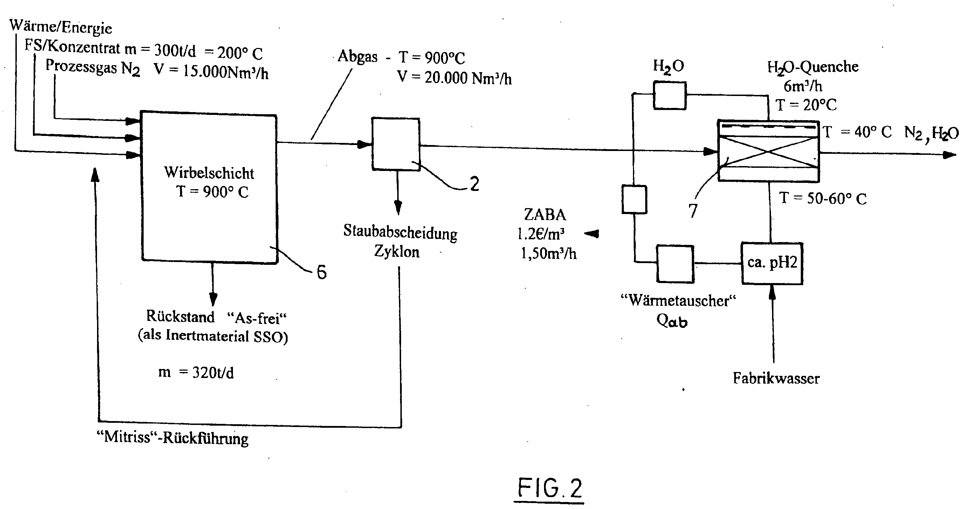

Figur 2 zeigt eine Abwandlung vom Konzept gemäß Figur 1. Statt des nicht erfindungsgemäßen Drehrohrofens (1) wird hier eine Wirbelschichtanlage (6) verwendet. Der Abscheider (3) und der Sekundärabscheider (4) sind hierbei zu einem einstufigen Abscheider (7) zusammengefasst. Unter Verwendung des Wärmetauschers (5) kann auch bei diesem Konzept eine geeignete Reduktion der Temperatur des finalen Abgases erfolgen.

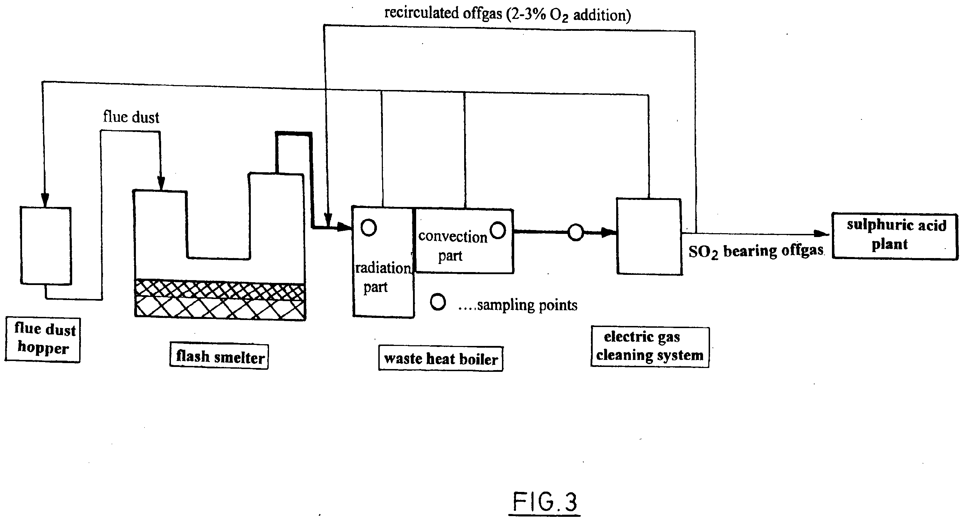

Figur 3 veranschaulicht generell die Handhabung und Abführung des Flugstaubes bei der Kupferproduktion.

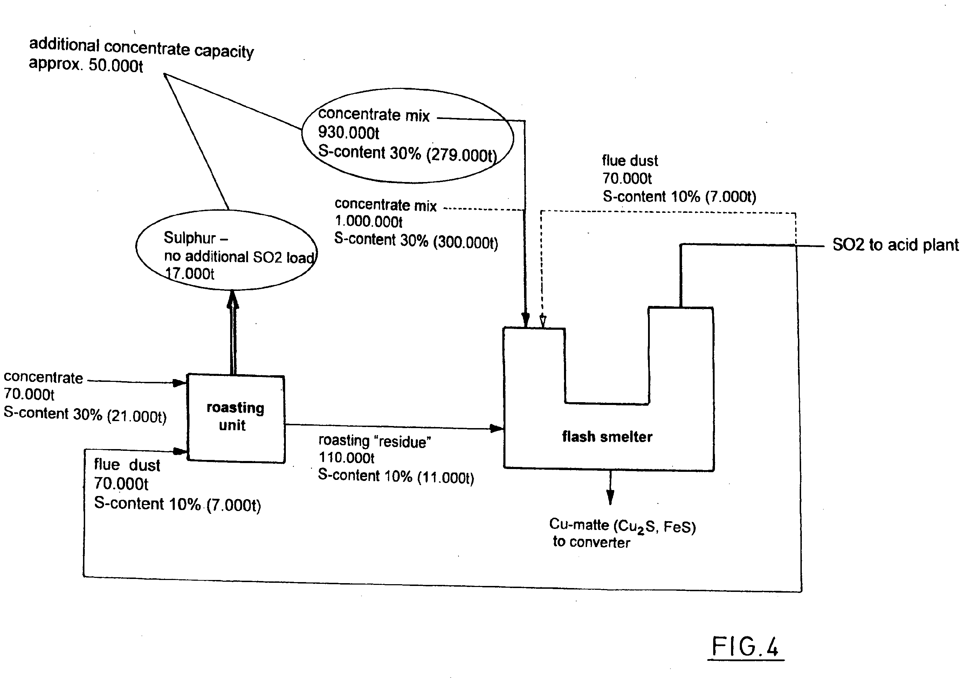

Figur 4 veranschaulicht eine Schwefelbilanz bei einer Gegenüberstellung des Standes der Technik und des erfindungsgemäßen Verfahrenskonzeptes bei einem ausgewählten Durchsatzbeispiel.

Die erfindungsgemäße Abscheidung sowie Behandlung der Flugstäube erfolgt als kontinuierlicher Prozess. Ebenfalls erfolgt eine bevorzugte Prozessdurchführung bei Umgebungsdruck. Anwendbar sind aber auch Prozessdurchführungen bei Unterdruck oder bei Überdruck in Abhängigkeit von den konkreten Anwendungsanforderungen.

Die erfindungsgemäße Behandlung der Flugstäube in einer inerten Atmosphäre berücksichtigt insbesondere, dass Arsen oder andere zu entfernende Substanzen im Flugstaub typischerweise in einer anderen Form als im zu Grunde liegenden Konzentrat vorliegen. Typisch sind bei einem Vergleich der entsprechenden Anteile in den Flugstäuben und im Konzentrat andere Verteilungskoeffizienten sowie andere chemische Bindungen. Beispielsweise kann das Arsen im Konzentrat als Enargit, Tennantit, Arsenopyrit oder Arsensulfid vorliegen, in Flugstäuben liegt das Arsen typischerweise als Arsenoxid, Arsensulfid, Eisen- oder Kupferarsenat vor.

Die inerte Atmosphäre beim Vorgang des Röstens ermöglicht eine deutliche Absenkung des SO2-Gehaltes im Abgas. Angestrebt ist hierbei ein entsprechender Anteil unterhalb von 5%, bevorzugt unterhalb von 2%, jeweils als Volumenanteil. Optional ist aber auch daran gedacht, doch eine Oxidierung des Abgases bzw. von Anteilen des Abgases durchzuführen.

## Patentansprüche

1. Verfahren zur Aufbereitung von bei der Produktion von Kupfer entstehenden Flugstäuben, bei dem die Flugstäube nach einer Zugabe von Schwefel und/oder einer Schwefelverbindung in einer Wirbelschicht (6) erhitzt und flüchtige Bestandteile abgeschieden werden, wobei das Erhitzen der Flugstäube in einer inerten Atmosphäre durchgeführt wird und die Behandlung der Flugstäube als ein kontinuierlicher Prozess durchgeführt wird und eine pyrometallurgische Behandlung der Flugstäube erfolgt und eine einstufige Abgasbehandlung zur Abtrennung von flüchtigen Bestandteilen, wie Arsen, Wismut, Cadmium und/oder Blei, erfolgt, **dadurch gekennzeichnet, dass** mithilfe eines Zyklons (2) eine Staubabscheidung des aus der Wirbelschicht (6) abgeführten Abgases vorgenommen wird, wobei der abgeschiedene Staub in die Wirbelschicht (6) rückgeführt wird und wobei im Anschluss an den Zyklon (2) ein Abscheider (7) verwendet wird, und dass ein Anteil von Schwefeldioxid im Abgas im Mittel höchstens 5 Volumenprozent beträgt.

2. Verfahren nach Anspruch 1, **dadurch gekennzeichnet, dass** Arsen elementar oder in Form von Arsen-Schwefelverbindungen verflüchtigt und anschließend abgeschieden wird.

3. Verfahren nach einem der Ansprüche 1 bis 2, **dadurch gekennzeichnet, dass** die Behandlung der Flugstäube bei Umgebungsdruck durchgeführt wird.

4. Verfahren nach einem der Ansprüche 1 bis 2, **dadurch gekennzeichnet, dass** die Behandlung der Flugstäube bei Unterdruck durchgeführt wird.

5. Verfahren nach einem der Ansprüche 1 bis 2, **dadurch gekennzeichnet, dass** die Behandlung der Flugstäube bei Überdruck durchgeführt wird,

6. Verfahren nach einem der Ansprüche 1 bis 5, **dadurch gekennzeichnet, dass** die Temperatur während der Erhitzung des Flugstaubes mindestens zeitweilig im Bereich von 500°C bis 1.000°C liegt.

7. Verfahren nach mindestens einem der vorstehenden Ansprüche, **dadurch gekennzeichnet, dass** die Behandlung der Flugstäube bei einer Temperatur von 900°C erfolgt.

## Claims

1. Process for treating flue dusts arising in the production of copper, in which the flue dusts are, after addition of sulfur and/or a sulfur compound, heated in a fluidized bed (6) and volatile constituents are separated off, wherein the heating of the flue dusts is carried out in an inert atmosphere and the treatment of the flue dusts is carried out as a continuous process and a pyrometallurgical treatment of the flue dusts is carried out and a single-stage offgas treatment to separate off volatile constituents such as arsenic, bismuth, cadmium and/or lead is carried out, **characterized in that** separating-off of dust from the offgas discharged from the fluidized bed (6) is carried out with the aid of a cyclone (2), wherein the dust which has been separated off is recirculated to the fluidized bed (6) and wherein a separator (7) is used downstream of the cyclone (2), and **in that** a proportion of sulfur dioxide in the offgas is on average not more than 5 percent by volume.

2. Process according to Claim 1, **characterized in that** arsenic in elemental form or in the form of arsenicsulfur compounds is volatilized and subsequently separated off.

3. Process according to either of Claims 1 and 2, **characterized in that** the treatment of the flue dusts is carried out at ambient pressure.

4. Process according to either of Claims 1 and 2, **characterized in that** the treatment of the flue dusts is carried out under subatmospheric pressure.

5. Process according to either of Claims 1 and 2, **characterized in that** the treatment of the flue dusts is carried out under superatmospheric pressure.

6. Process according to any of Claims 1 to 5, **characterized in that** the temperature during heating of the flue dusts is at least temporarily in the range from 500°C to 1000°C.

7. Process according to at least one of the preceding claims, **characterized in that** the treatment of the flue dusts is carried out at a temperature of 900°C.

## Revendications

1. Procédé de traitement de cendres volantes se formant lors de la production du cuivre, dans lequel les cendres volantes, après une addition de soufre et/ou d'un composé du soufre, sont chauffées dans un lit fluidisé (6) et les constituants volatils sont séparés, le chauffage des cendres volantes étant mis en œuvre dans une atmosphère inerte et le traitement des cendres volantes étant mis en œuvre sous forme d'un processus continu, un traitement pyrométallurgique des cendres volantes étant réalisé et un traitement de l'effluent gazeux en une étape étant réalisé pour séparer les constituants volatils tels que l'arsenic, le bismuth, le cadmium et/ou le plomb, **caractérisé en ce que**, à l'aide d'un cyclone (2), on procède à une séparation des cendres de l'effluent gazeux évacué du lit fluidisé (6), les cendres séparées étant renvoyées dans le lit fluidisé (6), un séparateur (7) étant utilisé après le cyclone (2), et **en ce qu'**une partie du dioxyde de soufre dans l'effluent gazeux est en moyenne d'au plus 5 % en volume.

2. Procédé selon la revendication 1, **caractérisé en ce que** l'arsenic est volatilisé sous forme élémentaire ou de composés arsenic-soufre, puis est séparé.

3. Procédé selon l'une des revendications 1 à 2, **caractérisé en ce que** le traitement des cendres volantes est mis en œuvre sous la pression ambiante.

4. Procédé selon l'une des revendications 1 à 2, **caractérisé en ce que** le traitement des cendres volantes est mis en œuvre en dépression.

5. Procédé selon l'une des revendications 1 à 2, **caractérisé en ce que** le traitement des cendres volantes est mis en œuvre en surpression.

6. Procédé selon l'une des revendications 1 à 5, **caractérisé en ce que** la température pendant le chauffage des cendres volantes est au moins de temps à autre dans la plage de 500 °C à 1 000 °C.

7. Procédé selon au moins l'une des revendications précédentes, **caractérisé en ce que** le traitement des cendres volantes est réalisé à une température de 900 °C.
